# EUROPÄISCHE PATENTSCHRIFT

(11) **EP 1 500 827 B1**
(45) Veröffentlichungstag und Bekanntmachung des Hinweises auf die Patenterteilung: **29.11.2006**
(21) Anmeldenummer: 04013092.4
(22) Anmeldetag: 03.06.2004
(51) Int. Cl.: F16B 7/18

(54) **Baukastensystem**
Modular construction system
Système de construction modulaire

(30) Priorität: 24.07.2003 AT 11682003
(43) Veröffentlichungstag der Anmeldung: 26.01.2005
(73) Patentinhaber: Lenz, Bernhard, 6858 Schwarzach (AT)
(72) Erfinder: Lenz, Bernhard, 6858 Schwarzach (AT)
(74) Vertreter: Hefel, Herbert

(56) Entgegenhaltungen:
- EP-A- 0 867 625
- CH-A- 692 090
- DE-A- 3 604 989
- DE-A- 4 244 396
- DE-U- 9 006 344

## Beschreibung

Die Erfindung betrifft ein Baukastensystem zum Aufbau von Maschinen Tragkonstruktionen und/oder Maschinen-Schutzzäunen umfassend
- stranggepresste Aluminium-Profilstäbe mit hinterschnittenen Längsnuten an ihren rechtwinklig zueinanderstehenden Längsseiten und
- Profilverbinder, mit denen ein erster Profilstab stirnseitig mit einer Längsseite eines zweiten Profilstabes verbindbar ist, wobei die Profilverbinder in die Längsnuten der Profilstäbe einsetzbare Nutensteine aufweisen.

Solche Baukastensysteme sind in unterschiedlichen Ausführungsformen bekannt. Ein aus einem derartigen Baukastensystem aufgebauter Maschinen-Schutzzaun ist beispielsweise in der AT 408 561 B gezeigt. Schutzzäune für Maschinen werden eingesetzt, um den Zugang zu gefährlichen Stellen von Maschinen zu beschränken. Dieser Maschinen-Schutzzaun ist ohne Schweißen, allein durch Schraubverbindungen aufbaubar. Aus stranggepressten Aluminium-Profilstäben, die an ihren Längsseiten hinterschnittene Längsnuten aufweisen, werden mittels Profilverbindern umfangsgeschlossene Rahmen ausgebildet, die mittels Verbindungselementen miteinander verbunden werden. An den Rahmen werden diese überspannende Gitter festgelegt, wobei Klemmbuchsen in die hinterschnittenen Längsnuten der Aluminium-Profilstäbe eingesetzt werden. Ein weiterer solcher Maschinen-Schutzzaun geht auch aus der DE 199 20 488 A1 hervor.

Weiters dient ein derartiges Baukastensystem zum Aufbauen von Tragkonstruktionen für Maschinen, beispielsweise als Grundrahmen solcher Maschinen zur Unterstützung, Anbringung und gegenseitigen Ausrichtung von verschiedenen Maschinenteilen bzw. verschiedenen Arbeitsstationen und Transporteinrichtungen dazwischen.

Profilverbinder zur Verbindung von stranggepressten Aluminium-Profilstäben sind beispielsweise unter anderem aus der DE 36 04 989 A1, DE 90 06 344 U1, DE 41 27 284 C1 und DE 42 44 396 A1 bekannt die in jedem Fall alle Merkmale des Oberbegriffs des Anspruchs 1 einschließen.

Als Alternative für Maschinen- Schutzzäune, die aus einem verschraubten Baukastensystem mit stranggepressten Aluminium-Profilstäben hergestellt sind, sind Schutzzäune aus Stahl bekannt, welche aus Elementen aufgebaut sind, die von Rahmen aus miteinander verschweißten Stahlprofilen mit angeschweißten Gittern gebildet werden, wobei diese Zaunelemente mit Stehern verschraubt werden. Diese Schutzzäune sind wesentlich unflexibler als die genannten Baukastensysteme.

Im Maschinenbau werden weiters Stahlprofile eingesetzt, die im Querschnitt gesehen quadratisch ausgebildet sind und einen Längsschlitz an einer Wand aufweisen, in welche Profilverbinder einsetzbar sind, um die Stahlprofile miteinander zu verbinden. Weiters sind auch Profilformen bekannt, welche einen zentralen Quersteg aufweisen, der zwei gegenüberliegende Längsseiten des Stahlprofils miteinander verbindet, wobei in den beiden anderen ebenfalls gegenüberliegenden Längsseiten Längsschlitze eingebracht sind. Aufgrund der geringen Flexibilität dieser Systeme werden diese nur für einfache Konstruktionen eingesetzt und haben im Vergleich zu Baukastensystemen mit stranggepressten Aluminium-Profilstäben eine wesentlich geringere Verbreitung. Auch ist das Zuschneiden von Aluminium-Profilstäben vor Ort leichter möglich. Insbesondere aber sind die für stranggepresste Aluminium-Profilstäbe vorhandenen Verbindungsmöglichkeiten aufgrund der im Strangpressverfahren herstellbaren komplizierten Formgebungen und den dabei einsetzbaren Profilverbindern vielseitiger.

Aufgabe der Erfindung ist es, ein Baukastensystem zum Aufbau von Maschinen-Tragkonstruktionen und/oder Maschinen-Schutzzäunen bereitzustellen, welches eine sehr hohe Flexibilität zur Anpassung an die jeweiligen Erfordernisse aufweist, gleichzeitig kostengünstiger als die herkömmlichen Baukastensysteme der eingangs genannten Art ist. Erfindungsgemäß gelingt dies durch ein Baukastensystem mit den Merkmalen des Anspruchs 1.

Durch die Erfindung wird somit ein Baukastensystem bereitgestellt, bei dem sowohl stranggepresste (= stranggezogene) Aluminium-Profilstäbe als auch durch Biegevorgänge aus Blechen geformte Stahl-Profilstäbe einsetzbar sind. Die Stahl-Profilstäbe weisen hierbei an ihren Längsseiten hinterschnittene Längsnuten auf, von denen die Breiten der Nutöffnungen mit den Breiten der Nutöffnungen der Längsnuten an den Längsseiten der Aluminium-Profilstäbe übereinstimmen, wobei in den Längsnuten der Aluminium-Profilstäben und den Längsnuten der Stahl-Profilstäbe die gleichen Nutensteine einsetzbar sind. Es werden dadurch in einfacher Weise Mischkonstruktionen ermöglicht, welche sowohl stranggepresste Aluminium-Profilstäbe als auch Stahl-Profilstäbe aufweisen.

Bei einem erfindungsgemäßen Baukastensystem können Vorteile von üblichen Baukastensystemen, welche entweder nur Aluminium-Profilstäbe aufweisen oder nur Stahl-Profilstäbe aufweisen, vereint werden. Ein erfindungsgemäßes Baukastensystem weist die Flexibilität und Vielseitigkeit von herkömmlichen Aluminium-Profilstab-Baukastensystemen auf. Durch die Kompatibilität der erfindungsgemäß bereitgestellten Stahl-Profilstäbe können aber die stranggepressten Aluminium-Profilstäbe in Teilen der Konstruktion, insbesondere an Stellen mit weniger hohen Anforderungen an die Anpassungsmöglichkeiten an lokale Gegebenheiten und die Vielseitigkeit der Verbindungsmöglichkeiten, durch Stahl-Profilstäbe ersetzt werden, wodurch wesentliche Kosteneinsparungen erreicht werden können.

Beispielsweise können bei der Herstellung eines Maschinen-Schutzzauns die Grundrahmen aus Stahl-Profilstäben ausgebildet werden und Anbauten an die Grundrahmen mit Aluminium-Profilstäben ausgebildet werden, welche beispielsweise bei der Montage vor Ort leicht auf Länge geschnitten werden können und aufgrund ihrer Formgebung manche Verbindungstechniken zumindest leichter ermöglichen.

Weitere Vorteile und Einzelheiten der Erfindung werden im Folgenden anhand des in der beiliegenden Zeichnung dargestellten Ausführungsbeispiels der Erfindung erläutert. In der Zeichnung zeigen:
- Fig. 1: eine perspektivisch Darstellung eines Zaunelementes eines Maschinen-Schutzzauns mit einem Anbau;
- Fig. 2: eine perspektivisch Darstellung eines Stahl-Profilstabes;
- Fig. 3: eine stirnseitige Ansicht des Stahl-Profilstabes von Fig. 2;
- Fig. 4: eine stirnseitige Ansicht eines Aluminium-Profilstabes;
- Fig. 5: eine perspektivisch Darstellung eines Stahl-Profilstabs, der mittels eines Profilverbinders stirnseitig mit einer Längsseite eines Aluminium-Profilstabes verbunden ist;
- Fig. 6: die Teile von Fig. 5 auseinandergezogen;
- Fig. 7: ein Aluminium-Profilstab, der mittels eines anderen Ausführungsbeispiels eines Profilverbinders stirnseitig mit einer Längsseite eines Stahl-Profilstabs verbunden ist;
- Fig. 8: die Teile von Fig. 7 auseinandergezogen.

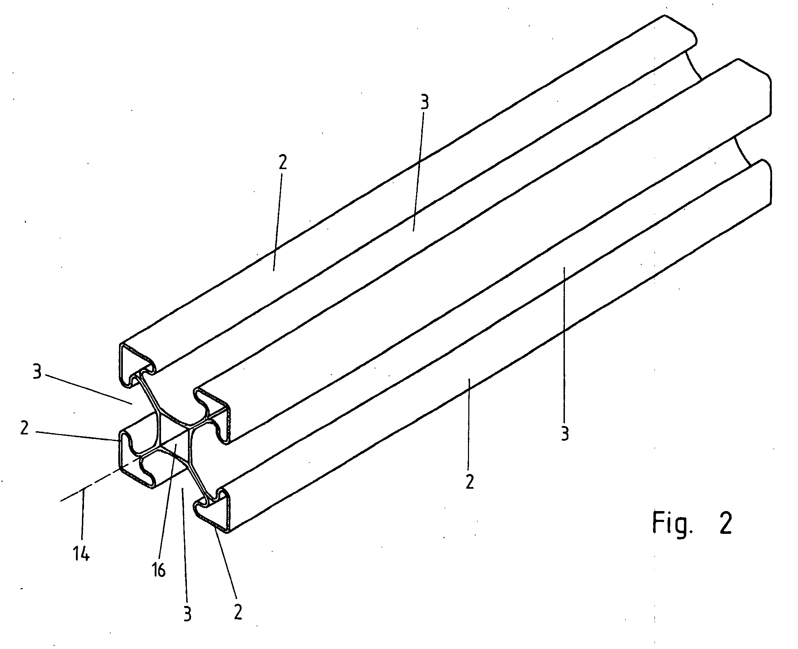

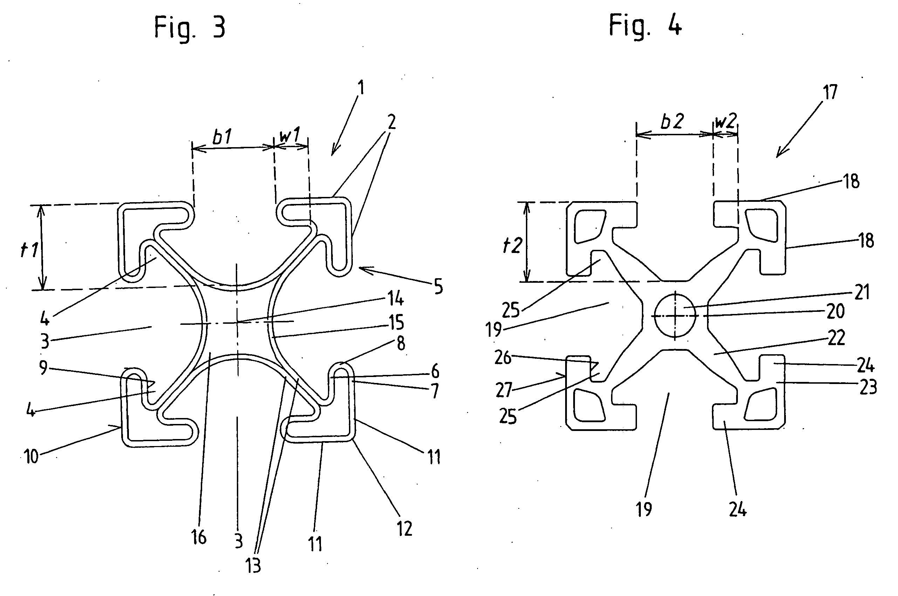

Ein beim gezeigten Ausführungsbeispiel der Erfindung eingesetzter Stahl-Profilstab 1 ist in den Fig. 2 und 3 dargestellt. Die Längsseiten 2 des Stahlprofilstabs 1 stehen rechtwinklig zueinander, wobei die Längsseiten 2 in Stirnansicht bzw. im Querschnitt des Profilstabs 1 gesehen auf den Seiten eines gedachten Quadrats liegen. An jeder der Längsseiten 2 ist eine in Längsrichtung des Profilstabs 1 verlaufende, hinterschnittene Längsnut 3 angeordnet. Die hinterschnittenen Bereich 4 einer jeweiligen Längsnut 3 werden nach außen durch Vorsprünge 5 begrenzt. Diese die Hinterschneidungen 5 begrenzenden Vorsprünge 5 werden von einem inneren und einem äußeren Steg 6, 7 gebildet, die über eine Umbiegung 8 miteinander verbunden sind.

An den den hinterschnittenen Bereichen 4 zugewandten Seiten der Vorsprünge 5 weisen diese jeweils eine Begrenzungsfläche 9 auf, welche den jeweiligen hinterschnittenen Bereich 4 nach außen, d. h. zur Außenseite des Stahl-Profilstabs hin, begrenzt. eine jeweilige Begrenzungsfläche 9 liegt parallel zur Außenfläche 10 der Längsseite 2, an der die zugehörige Längsnut 3 angeordnet ist. Im gezeigten Ausführungsbeispiel wird diese Begrenzungsfläche 9 von der Innenfläche des inneren Stegs 6 gebildet.

An die äußeren Stege 7 der Vorsprünge 5 schließen Fortsetzungsstege 11 an, wobei die Fortsetzungsstege 11 von zwei benachbarten Längsseiten 2 zwischen sich die Profilecken 12 einschließen. Hierbei können die Profilecken 12 durch Abbiegungen zwischen den Fortsetzungsstegen 11 gebildet werden oder die Fortsetzungsstege 11 sind im Bereich der Profilecke 12 miteinander verschweißt, wie dies weiter unten noch genauer erläutert ist. Die inneren Stege 6 der Vorsprünge 5 sind jeweils über eine Umbiegung mit einem Diagonalsteg 13 verbunden. Zwei Diagonalstege 13, die mit den inneren Stegen 6 von Vorsprüngen 5 benachbarter Längsseiten 2 verbunden sind, liegen aneinander an und erstrecken sich gemeinsam in Richtung zur zentralen Längsachse 14 des Stahl-Profilstabs 1. Die beiden Diagonalstege 13, die mit den inneren Stegen 6 der auf der gleichen Längsseite 2 liegenden Vorsprünge 5 verbunden sind, sind weiters über Verbindungsstege 15 miteinander verbunden. Die Verbindungsstege 15 schließen zwischen sich eine zentrale, in Längsrichtung des Stahl-Profilstabs durchgehende Öffnung 16 ein.

Ein in stirnseitiger Ansicht in Fig. 4 dargestellter stranggezogener bzw. stranggepresster Aluminium-Profilstab 17 weist in analoger Weise vier Längsseiten 18 auf, die auf den Seiten eines gedachten Quadrats liegen. Bevorzugterweise weisen die gedachten Quadrate, auf denen die Längsseiten 2 der Stahlprofilstäbe und die Längsseiten 18 der Aluminium-Profilstäbe 17 liegen, gleiche Seitenlängen auf. In jeder Längsseite 18 ist wiederum eine in Längsrichtung des Profilstabs 17 verlaufende hinterschnittene Längsnut 19 angeordnet. Der Aluminium-Profilstab 17 weist einen zentralen Abschnitt 20 mit einer inneren, in Längsrichtung des Profilstabs durchgehenden Öffnung 21 auf. Vom zentralen Abschnitt 20 gehen sternförmig vier Arme 22 aus, an deren außenliegenden Enden Eckabschnitte 23 angebracht sind, die hier jeweils mit einem durchgehenden Kanal versehen sind. Die Eckabschnitte weisen weiters Vorsprünge 24 auf, welche die hinterschnittenen Bereich 25 der Nuten 19 nach außen begrenzen. Hierbei besitzen die Vorsprünge 24 an ihren innenliegenden Seiten Begrenzungsflächen 26 der Längsnuten 19. Eine jeweilige Begrenzungsfläche 26 der Längsnut 19 liegt parallel zur Außenfläche 27 der Längsseite 18, in der die von dem jeweiligen Vorsprung 24 begrenzte Längsnut 19 liegt.

Solche stranggezogenen Aluminium-Profilstäbe, wie sie aus den Fig. ersichtlich sind, sind bekannt und werden in herkömmlichen Baukastensystemen zum Aufbau von Maschinenkonstruktionen und Maschinen-Schutzzäunen eingesetzt.

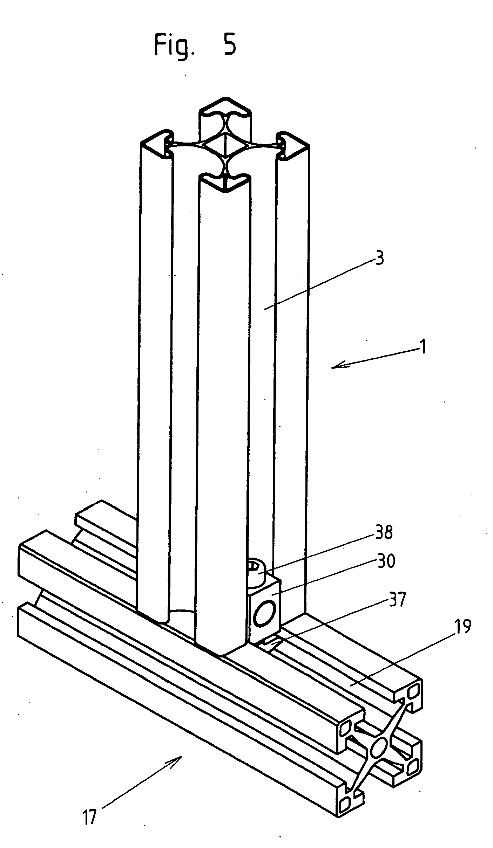

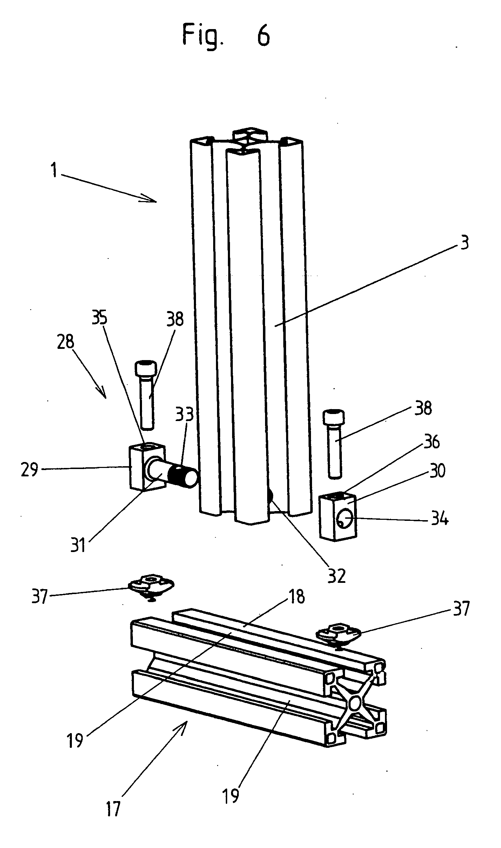

Die stirnseitige Verbindung eines Stahl-Profilstabs 1 mit der Längsseite eines Aluminium-Profilstabs 17 ist in den Fig. 5 und 6 dargestellt. Es sind hierzu Profilverbinder 28 vorgesehen, welche im gezeigten Ausführungsbeispiel wie folgt aufgebaut sind:

Der Profilverbinder 28 besitzt zwei Verbinderstücke 29, 30. Am Verbinderstück 29 ist ein Querbolzen 31 angebracht, der durch eine in der Nähe des stirnseitigen Endes durch den Stahl-Profilstab 1 eingebrachte Querbohrung 32 eingesteckt wird. Die Querbohrung 32 mündet in zwei gegenüberliegende Längsnuten 3. Das Verbinderstück 29 liegt dann in einer dieser Längsnuten 3. Im in die gegenüberliegende Längsnut 3 ragenden Abschnitt des Querbolzens 31 ist eine Durchgangsbohrung 33 angebracht. Auf den in die gegenüberliegende Längsnut 3 ragenden Abschnitt des Querbolzens 31 wird das Verbinderstück 30 mit einer querverlaufenden Durchtrittsöffnung 34 aufgesteckt. Die Verbinderstücke 29, 30 weisen weiters Durchtrittsöffnungen 35, 36 auf, die sich im in die Längsnuten 3 eingesetzten Zustand der Verbinderstücke 29, 30 in Längsrichtung des Stahl-Profilstabs 1 erstrecken.

In die dem Stahl-Profilstab 1 zugewandte Längsnut 19 des Aluminium-Profilstabs 17 werden zwei Nutensteine 37 eingesetzt. Durch die Durchtrittsöffnungen 35, 36 der Verbinderstücke 29, 30 werden Schraubbolzen 38 eingesteckt und in die Nutensteine 37 eingedreht. Der das Verbindungsstück 30 durchsetzende Schraubbolzen 38 durchsetzt hierbei die Durchgangsbohrung 33 im Querbolzen 31.

Auf die gleiche Weise könnte auch ein Aluminium-Profilstab 17 stirnseitig mit der Längsseite eines Stahl-Profilstabs 1 verbunden werden. Hierzu müsste nur im Aluminium-Profilstab 17 in der Nähe seiner Stirnseite eine Querbohrung entsprechend der beschriebenen Querbohrung 32 eingebracht werden. Die Teile des Profilverbinders 28, der im gezeigten Ausführungsbeispiel von den Verbinderstücken 29, 30, den beiden Nutensteinen 37 und den beiden Schraubbolzen 38 gebildet wird, könnten hierbei identisch ausgebildet sein und sowohl für die stirnseitige Verbindung eines Stahl-Profilstabs mit der Längsseite eines Aluminium-Profilstabs und für die stirnseitige Verbindung eines Aluminium-Profilstabs mit der Längsseite eines Stahl-Profilstabs eingesetzt werden.

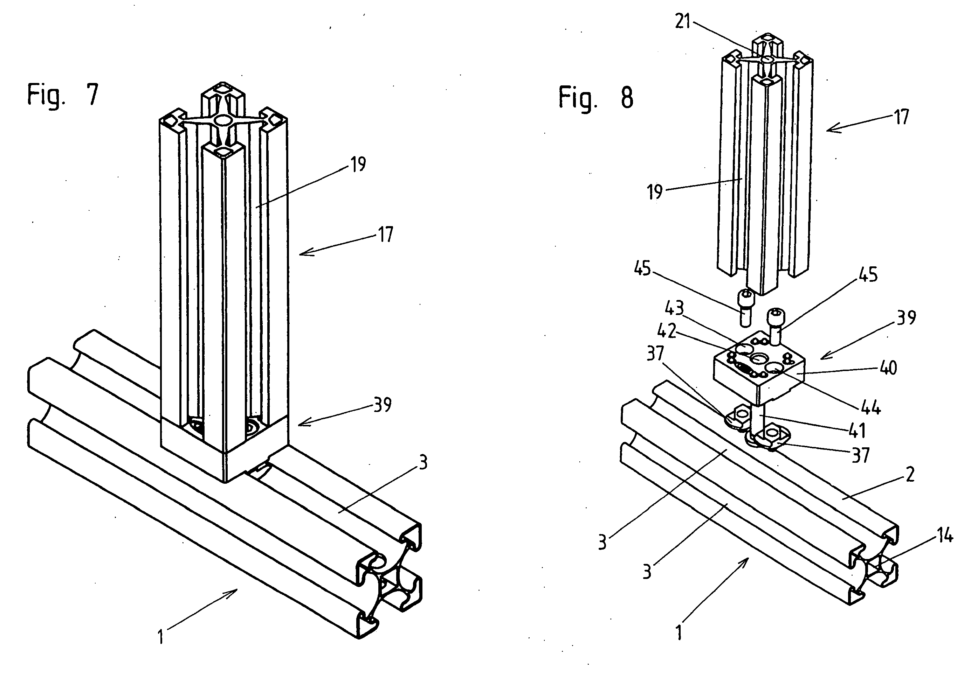

In den Fig. 7 und 8 ist eine weitere Art der stirnseitigen Verbindung eines Aluminium-Profilstabs 17 mit der Längsseite eines Stahl-Profilstabs 1 dargestellt. Der Profilverbinder 39 weist hier einen an der Stirnseite des Aluminium-Profilstabs 17 festlegbaren plattenförmigen Körper 40 auf. Hierzu wird ein Schraubbolzen 41 durch eine zentrale Durchtrittsöffnung 42 des Körpers 40 eingesteckt und in die zentrale Öffnung 21 des Aluminium-Profilstabs 17 eingeschraubt. Weiters werden zwei Nutensteine 37 in die Längsnut 3 des Stahl-Profilstabs 1 eingesetzt, welche an der Längsseite 2 angeordnet ist, die dem Aluminium-Profilstab 17 zugewandt ist. Durch beidseitig der Durchtrittsöffnung 42 angeordnete Durchtrittsöffnungen 43, 44 im Körper 40 werden Schraubbolzen 45 durchgesteckt und in die Nutensteine 37 eingeschraubt. Die Nutensteine 37 dieses Profilverbinders 39 können dabei identisch mit den Nutensteinen des Profilverbinders 28 ausgebildet sein.

Ein derartiger Profilverbinder 39, der vom Körper 40, dem Schraubbolzen 41, den beiden Nutensteinen 37 und den beiden Schraubbolzen 45 gebildet wird, könnte hierbei auch zur stirnseitigen Verbindung eines Stahl-Profilstabs 1 mit der Längsseite 18 eines Aluminium-Profilstabs 17 eingesetzt werden. Es ist hierbei noch eine Einsatzmuffe zum Einstecken in den stirnseitigen Endbereich der Öffnung 16 vorgesehen, in welche der Schraubbolzen 41 eingedreht wird (nicht dargestellt in den Fig.).

Mittels der Profilverbinder 28, 39 können in analoger Weise auch Verbindungen zwischen zwei Aluminium-Profilstäben 17 oder zwischen zwei Stahl-Profilstäben 1 hergestellt werden.

Die Breiten b1 der Nutöffnungen der Nuten 3 an den Längsseiten 2 der Stahl-Profilstäbe 1 stimmen mit den Nutbreiten b2 der Nutöffnungen der Längsnuten 19 an den Längsseiten 18 der Aluminium-Profilstäbe 17 überein und die Nutsteine 37 der Profilverbinder 28 und 39 sind sowohl in die Längsnuten 3 der Stahl-Profilstäbe 1 als auch in die Längsnuten 19 der Aluminium-Profilstäbe 17 einsetzbar und bei diesen verwendbar.

Vorteilhafterweise sind weiters die Nuttiefen t1 und t2 der Längsnuten 3 und 19 der Stahl-Profilstäbe 1 und Aluminium-Profilstäbe 17 im Wesentlichen gleich (d. h. sie unterscheiden sich um weniger als 10%). Vorteilhafterweise sind weiters die Breiten W1 der hinterschnittenen Bereich 4 der Längsnuten 3 der Stahl-Profilstäbe 1 mindestens so groß wie die Breiten w2 der hinterschnittenen Bereiche 25 der Längsnuten 19 der Aluminium-Profilstäbe 17.

Die Herstellung der Stahl-Profilstäbe 1 erfolgt aus flachen Blechstreifen, die durch Biegevorgänge umgeformt werden. Im gezeigten Ausführungsbeispiel sind hierbei 24 Biegestationen mit jeweiligen Rollensätzen vorhanden, um die für die Kompatibilität mit dem Aluminium-Profilstab erforderliche Komplexität des Stahl-Profilstabs zu erreichen. Nach dem Biegen grenzen die beiden Längsränder des gebogenen Metallbleches im Bereich einer Profilecke 12 aneinander an und werden in der Folge an dieser Profilecke 12 miteinander verschweißt. Die anderen Profilecken 12 werden durch Abbiegungen des Blechs gebildet (durch Abbiegungen jeweils zwischen den Fortsetzungsstegen 11). Es ist somit nur eine einzelne Schweißnaht zur Herstellung des Stahl-Profilstabs erforderlich, der auf diese Weise ein im Querschnitt (bzw. in Stirnansicht) gesehen umfangsgeschlossen verlaufendes Blech aufweist.

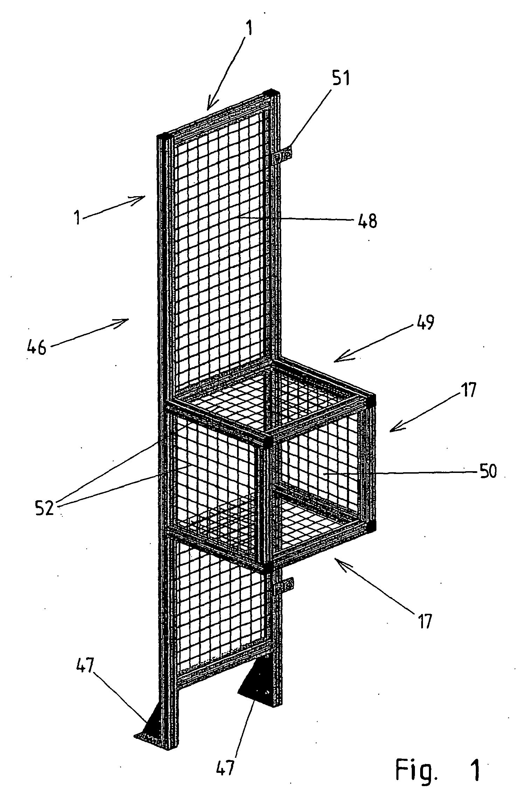

Ein Teil eines Maschinen-Schutzzauns, der mit einem Baukastensystem entsprechend dem beschriebenen Ausführungsbeispiel der Erfindung aufgebaut ist, ist in Fig. 1 dargestellt. Ein Zaunelement 46 besitzt einen umlaufenden Rahmen, der von miteinander verbundenen Stahl-Profilstäben 1 gebildet wird. Zur Herstellung dieser Verbindungen können hierbei die beschriebenen Profilverbinder 28, 39 eingesetzt werden. Die vertikal verlaufenden Stahl-Profilstäbe stehen über die unteren horizontal verlaufenden Stahl-Profilstäbe 1 nach unten vor und an ihnen sind Montageecke 47 angebracht, beispielsweise mittels Bohrungen in den Montageecken 47 durchsetzenden Schrauben die in in Längsnuten 3 der Stahl-Profilstäbe 1 eingesetzte Nutensteine 37 eingeschraubt sind. In den Rahmen aus den Stahlprofilstäben 1 ist ein Gitter 48 eingesetzt. Befestigungselemente für dieses Gitter 48, die in die hinterschnittenen Längsnuten 3 der Stahl-Profilstäbe 1 eingesetzt werden, sind beispielsweise aus dem im Zusammenhang mit Schutzzäunen eingangs genannten Stand der Technik bekannt.

Im Gitter 48 ist in einem mittleren Bereich des Zaunelements 46 eine Öffnung ausgespart, die durch einen Anbau 49 fortgesetzt wird. Dieser Anbau 49 wird von einem in einer vertikalen Ebene liegenden Rahmen aus Aluminium-Profilstäben 17 gebildet, der über horizontal verlaufende und senkrecht zu den Ebenen der Rahmen aus den Stahl-Profilstäben 1 und den Aluminium-Profilstäben 17 stehende Aluminium-Profilstäbe 17 mit den vertikalen Stahl-Profistäben 1 verbunden wird. Die Verbindungen zwischen den Aluminium-Profilstäben 17 untereinander können beispielsweise durch Profilverbinder 39 hergestellt werden. Auch die Profilverbinder 28 könnten zu diesem Zweck eingesetzt werden, wenn die entsprechenden Querbohrungen in den Aluminium-Profilstäben 17 eingebracht werden. Die Verbindungen zwischen den Aluminium-Profilstäben 17 und den Stahl-Profilstäben 1 kann wiederum mittels der Profilverbinder 39 oder auch mittels der Profilverbinder 28 hergestellt werden. Mit Ausnahme des in einer vertikalen Ebene liegenden Rahmens aus den Aluminium-Profilstäben werden in die zwischen den Aluminium-Profilstäben liegenden Öffnungen Gitter 52 eingesetzt. Es wird dadurch insgesamt eine Durchreiche mit einer horizontalen Durchtrittsöffnung 50 gebildet, beispielsweise um eine Förderband durch die Durchtrittsöffnung 50 in einen geschützten Bereich zu führen, wobei es durch den Anbau 49 verhindert wird, dass eine Person bis in den geschützten Bereich greifen kann.

Die einzelnen Zahnelemente 46 werden beispielsweise mittels Längsverbindern 51 miteinander verbunden, die durch Plättchen gebildet werden, welche zwei Bohrungen aufweisen, durch die jeweils ein Schraubbolzen in einen Nutenstein eingeschraubt wird, der in einer Längsnut 3 des Stahl-Profilstabs 1 eines jeweiligen Zaunelements 46 eingesetzt ist.

Mit einem erfindungsgemäßen Baukastensystem, welches verschiedene weitere bei derartigen Baukastensystemen herkömmliche Bauteile aufweisen kann, sind verschiedenste Maschinen-Tragkonstruktionen und Maschinen-Schutzzäune aufbaubar.

Unterschiedliche Modifikationen des gezeigten Ausführungsbeispiels, beispielsweise hinsichtlich der Profilformen der Profilstäbe 1, 17 und der Ausbildungen der Profilverbinder 28, 39 sind denkbar und möglich, ohne den Bereich der Erfindung zu verlassen. Beispielsweise sind Nutensteine bekannt, die von den längsseitigen Enden der Profilstäbe in die Nuten einzuschieben sind oder solche, die von der Längsseite des Profilstabes her in die Nut eingesetzt werden und in der Folge um 90° verdreht werden.

Statt Gitter 48, 52 könnten in die Zaunelemente 46 zumindest teilweise auch Scheiben oder Platten eingesetzt werden. Auch zwischen Zaunelemente 46 eingesetzte Türelemente sind bekannt.

### Legende zu den Hinweisziffern:

- 1: Stahl-Profilstab
- 2: Längsseite
- 3: Längsnut
- 4: hinterschnittener Bereich
- 5: Vorsprung
- 6: innerer Steg
- 7: äußerer Steg
- 8: Umbiegung Durchtrittsöffnung
- 9: Begrenzungsfläche
- 10: Außenfläche
- 11: Fortsetzungssteg
- 12: Profilecke
- 13: Diagonalsteg
- 14: Längsachse
- 15: Verbindungssteg
- 16: Öffnung
- 17: Aluminium-Profilstab
- 18: Längsseite
- 19: Längsnut
- 20: zentraler Abschnitt
- 21: Öffnung
- 22: Arm
- 23: Eckabschnitt
- 24: Vorsprung
- 25: hinterschnittener Bereich
- 26: Begrenzungsfläche
- 27: Außenfläche
- 28: Profilverbinder
- 29: Verbinderstück
- 30: Verbinderstück
- 31: Querbolzen
- 32: Querbohrung
- 33: Durchgangsbohrung
- 34: querverlaufende
- 35: Durchtrittsöffnung
- 36: Durchtrittsöffnung
- 37: Nutenstein
- 38: Schraubbolzen
- 39: Profilverbinder
- 40: Körper
- 41: Schraubbolzen
- 42: Durchtrittsöffnung
- 43: Durchtrittsöffnung
- 44: Durchtrittsöffnung
- 45: Schraubbolzen
- 46: Zaunelement
- 47: Montageecke
- 48: Gitter
- 49: Anbau
- 50: Durchtrittsöffnung
- 51: Längsverbinder
- 52: Gitter

## Patentansprüche

1. Baukastensystem zum Aufbau von Maschinen-Tragkonstruktionen und/oder Maschinen-Schutzzäunen umfassend
- stranggepresste Aluminium-Profilstäbe (17) mit hinterschnittenen Längsnuten (19) an ihren rechtwinklig zueinanderstehenden Längsseiten (18) und
- Profilverbinder (28, 39), mit denen ein erster Profilstab (17) stirnseitig mit einer Längsseite (18) eines zweiten Profilstabes (17) verbindbar ist, wobei die Profilverbinder (28, 39) in die Längsnuten (19) der Profilstäbe (17) einsetzbare Nutensteine (37) aufweisen,
**dadurch gekennzeichnet, dass** das Baukastensystem weiters durch Biegevorgänge aus Blechen geformte Stahl-Profilstäbe (1) umfasst, die an ihren rechtwinklig zueinanderstehenden Längsseiten (2) hinterschnittene Längsnuten (3) aufweisen, von denen die Breiten (b1) der Nutöffnungen mit den Breiten (b2) der Nutöffnungen der Längsnuten (19) an den Längsseiten (18) der Aluminium-Profilstäbe (17) übereinstimmen, wobei die Nutensteine (37) der Profilverbinder (28, 39) in die Längsnuten (3) der Stahl-Profilstäbe (1) einsetzbar sind und mittels der Profilverbinder (28, 39) ein Stahl-Profilstab (1) stirnseitig mit einer Längsseite (18) eines Aluminium-Profilstabs (17) und ein Aluminium-Profilstab (17) stirnseitig mit der Längsseite (2) eines Stahl-Profilstabs (1) verbindbar ist.

2. Baukastensystem nach Anspruch 1, **dadurch gekennzeichnet, dass** die Stahl-Profilstäbe (1) eine innere, in Längsrichtung des Stahl-Profilstabs durchgehende Öffnung (16) aufweisen.

3. Baukastensystem nach Anspruch 1 oder Anspruch 2, **dadurch gekennzeichnet, dass** die die hinterschnittenen Bereiche (4, 25) einer jeweiligen Längsnut (3, 19) nach außen begrenzenden Vorsprünge (5, 24) sowohl der Aluminium-Profilstäbe (17) als auch der Stahl-Profilstäbe (1) Begrenzungsflächen(9, 26) der Längsnuten (3, 19) aufweisen, die parallel zur Außenfläche (10, 27) der Längsseite (2, 18) liegen, in der diese Längsnut (3, 19) angeordnet ist.

4. Baukastensystem nach Anspruch 3, **dadurch gekennzeichnet, dass** die die hinterschnittenen Bereiche (4) begrenzenden Vorsprünge (5) der Stahl-Profilstäbe (1) innere und äußere Stege (6, 7) aufweisen, die jeweils über eine Umbiegung (8) miteinander verbunden sind.

5. Baukastensystem nach Anspruch 4, **dadurch gekennzeichnet, dass** an die äußeren Stege (7) der Vorsprünge (5) Fortsetzungsstege (11) anschließen, wobei die Fortsetzungsstege (11) von zwei benachbarten Längsseiten (2) des Stahl-Profilstabs (1) zwischen sich eine Profilecke (12) einschließen.

6. Baukastensystem nach Anspruch 5, **dadurch gekennzeichnet, dass** drei der Profilecken (12) von Abbiegungen zwischen den Fortsetzungsstegen (11) gebildet werden und die Fortsetzungsstege (11) an der vierten Profilecke (12) miteinander verschweißt sind.

7. Baukastensystem nach einem der Ansprüche 4 bis 6, **dadurch gekennzeichnet, dass** die inneren Stege (6) der Vorsprünge (5) jeweils über eine Umbiegung mit einem Diagonalsteg (13) verbunden sind und zwei Diagonalstege (13), die mit den inneren Stegen (6) von Vorsprüngen (5) benachbarter Längsseiten (2) des Stahl-Profilstabs (1) verbunden sind, aneinander anliegen und sich gemeinsam in Richtung zur zentralen Längsachse (14) des Stahl-Profilstabs (1) erstrecken.

8. Baukastensystem nach Anspruch 7, **dadurch gekennzeichnet, dass** die beiden Diagonalstege (13), die mit den inneren Stegen (6) der auf der gleichen Längsseite (2) liegenden Vorsprünge (5) verbunden sind, über Verbindungsstege (15) miteinander verbunden sind, wobei die Verbindungsstege (15) zwischen sich eine zentrale, in Längsrichtung des Stahl-Profilstabs (1) durchgehende Öffnung (16) einschließen.

9. Baukastensystem nach einem der Ansprüche 1 bis 8, **dadurch gekennzeichnet, dass** die Aluminium-Profilstäbe (17) eine innere, in Längsrichtung des Aluminium-Profilstabs durchgehende Öffnung (21) aufweisen.

10. Baukastensystem nach einem der Ansprüche 1 bis 9, **dadurch gekennzeichnet, dass** ein Profilverbinder (39) vorhanden ist, der einen an der Stirnseite eines Aluminium-Profilstabs (17) oder Stahl-Profilstabs (1) festlegbaren Körper (40) aufweist, welcher Durchtrittsöffnungen (43, 44) besitzt, durch welche Schraubbolzen (45) in in eine Längsnut (3, 19) eines Stahl-Profilstabs (1) oder Aluminium-Profilstabs (17) eingesetzte Nutensteine (37) einschraubbar sind.

11. Baukastensystem nach einem der Ansprüche 1 bis 10, **dadurch gekennzeichnet, dass** ein Profilverbinder (28) vorhanden ist, der Verbinderstücke (29, 30) aufweist, von welchen eines mit einem Querbolzen (31) versehen ist und der andere mit einer querverlaufenden Durchtrittsöffnung (34) versehen ist, in die der Querbolzen (31) einführbar ist und in dieser festlegbar ist, wobei die Verbinderstücke (29, 30) Durchtrittsöffnungen (35, 36) aufweisen, durch die Schraubbolzen durchführbar sind, die in Nutensteine (37) einschraubbar sind.

12. Baukastensystem nach Anspruch 11, **dadurch gekennzeichnet, dass** der Querbolzen (31) eine Durchgangsbohrung (33) aufweist, durch welche der durch die Durchtrittsöffnung (36) im Verbinderstück (30) durchgeführte Schraubbolzen (38) durchführbar ist.

13. Baukastensystem nach einem der Ansprüche 1 bis 12, **dadurch gekennzeichnet, dass** die Nuttiefen (t1, t2) der Längsnuten (3, 19) der Stahl-Profilstäbe (1) und der Aluminium-Profilstäbe (17) im Wesentlichen gleich sind.

14. Baukastensystem nach einem der Ansprüche 1 bis 13, **dadurch gekennzeichnet, dass** die Breiten (w1) der hinterschnittenen Bereiche (4) der Längsnuten (3) der Stahl-Profilstäbe (1) mindestens so groß wie die Breiten (w2) der hinterschnittenen Bereiche (25) der Längsnuten (19) der Aluminium-Profistäbe (17) sind.

15. Baukastensystem nach einem der Ansprüche 1 bis 14, **dadurch gekennzeichnet, dass** die Längsseiten (2, 18) sowohl der Stahl-Profilstäbe (1) als auch der Aluminium-Profilstäbe (17) in Stirnansicht gesehen jeweils auf den Seiten eines gedachten Quadrats liegen und die gedachten Quadrate für die Stahl-Profilstäbe (1) und die Aluminium-Profilstäbe (17) die gleiche Seitenlänge aufweisen.

## Claims

1. A modular construction system for the assembly of machine supporting structures and/or machine guards, comprising
- extruded aluminium profile bars (17) having undercut longitudinal grooves (19) on their longitudinal sides (18), which are at right angles to one another, and
- profile connectors (28, 39), by means of which a first profile bar (17) may be connected at its end face to a longitudinal side (18) of a second profile bar (17), the profile connectors (28, 39) having slide blocks (37) which may be inserted into the longitudinal grooves (19) of the profile bars (17),
**characterised in that** the modular construction system further comprises steel profile bars (1) which are formed from metal sheets by bending procedures and have, on their longitudinal sides (2) which are at right angles to one another, undercut longitudinal grooves (3), of which the widths (b1) of the groove openings correspond to the widths (b2) of the groove openings of the longitudinal grooves (19) on the longitudinal sides (18) of the aluminium profile bars (17), it being possible to insert the slide blocks (37) of the profile connectors (28, 39) into the longitudinal grooves (3) of the steel profile bars (1) and, by means of the profile connectors (28, 39), to connect a steel profile bar (10) at the end face to a longitudinal side (18) of an aluminium profile bar (17) and to connect an aluminium profile bar (17) at the end face to the longitudinal side (2) of a steel profile bar (1).

2. A modular construction system according to Claim 1, **characterised in that** the steel profile bars (1) have an inner opening (16) continuing in the longitudinal direction of the steel profile bar.

3. A modular construction system according to Claim 1 or Claim 2, **characterised in that** the projections (5, 24), both of the aluminium profile bars (17) and the steel profile bars (1), which outwardly delimit the undercut regions (4, 25) of a respective longitudinal groove (3, 19) have delimiting faces (9, 26) of the longitudinal grooves (3, 19), which are located parallel to the outer face (10, 27) of the longitudinal side (2, 18) in which this longitudinal groove (3, 19) is arranged.

4. A modular construction system according to Claim 3, **characterised in that** the projections (5) of the steel profile bars (1), which delimit the undercut regions (4), have inner and outer webs (6, 7) which are connected to one another in each case by way of a bent portion (8).

5. A modular construction system according to Claim 4, **characterised in that** continuation webs (11) adjoin the outer webs (7) of the projections (5), the continuation webs (11) of two adjacent longitudinal sides (2) of the steel profile bar (1) forming a profile corner (12) between them.

6. A modular construction system according to Claim 5, **characterised in that** three of the profile corners (12) are formed by bends between the continuation webs (11), and the continuation webs (11) are welded together at the fourth profile corner (12).

7. A modular construction system according to one of Claims 4 to 6, **characterised in that** the inner webs (6) of the projections (5) are connected in each case to a diagonal web (13) by way of a bent portion, and two diagonal webs (13), which are connected to the inner webs (6) of projections (5) of adjacent longitudinal sides (2) of the steel profile bar (1), abut against one another and extend together in the direction of the central longitudinal axis (14) of the steel profile bar (1).

8. A modular construction system according to Claim 7, **characterised in that** the two diagonal webs (13), which are connected to the inner webs (6) of the projections (5) located on the same longitudinal side (2), are connected to one another by way of connecting webs (15), the connecting webs (15) enclosing between them a central opening (16) continuing in the longitudinal direction of the steel profile bar (1).

9. A modular construction system according to one of Claims 1 to 8, **characterised in that** the aluminium profile bars (17) have an inner opening (21) continuing in the longitudinal direction of the aluminium profile bar.

10. A modular construction system according to one of Claims 1 to 9, **characterised in that** a profile connector (39) is present, which has a body (40) which may be fixed to the end face of an aluminium profile bar (17) or steel profile bar (1) and has through openings (43, 44) through which screw bolts (45) may be screwed into slide blocks (37) inserted into a longitudinal groove (3, 19) of a steel profile bar (1) or aluminium profile bar (17).

11. A modular construction system according to one of Claims 1 to 10, **characterised in that** a profile connector (28) is present, which has connector pieces (29, 30) of which one is provided with a cross bolt (31) and the other is provided with a transversely extending through opening (34) into which the cross bolt (31) may be guided and fixed therein, the connector pieces (29, 30) having through openings (35, 36) through which screw bolts, which may be screwed into slide blocks (37), may be guided.

12. A modular construction system according to Claim 11, **characterised in that** the cross bolt (31) has a through bore (33) through which the screw bolt (38) guided through the through opening (36) in the connector piece (30) may be guided.

13. A modular construction system according to one of Claims 1 to 12, **characterised in that** the groove depths (t1, t2) of the longitudinal grooves (3, 19) of the steel profile bars (1) and the aluminium profile bars (17) are substantially the same.

14. A modular construction system according to one of Claims 1 to 13, **characterised in that** the widths (w1) of the undercut regions (4) of the longitudinal grooves (3) of the steel profile bars (1) are at least as large as the widths (w2) of the undercut regions (25) of the longitudinal grooves (19) of the aluminium profile bars (17).

15. A modular construction system according to one of Claims 1 to 14, **characterised in that** the longitudinal sides (2, 18) of both the steel profile bars (1) and the aluminium profile bars (17), as seen in an end view, are each located on the sides of an imaginary square, and the imaginary squares for the steel profile bars (1) and the aluminium profile bars (17) have the same side lengths.

## Revendications

1. Système de construction modulaire pour la construction de structures portantes de machines et/ou de barrières de protection de machines, comprenant :
- des baguettes de profil en aluminium extrudées (17) avec des rainures longitudinales contre-dépouillées (19) sur leurs côtés longitudinaux (18) à angle droit entre eux, et
- des raccords de profil (28, 39) reliant une première baguette de profil (17) sur son côté frontal à un côté longitudinal (18) d'une seconde baguette de profil (17), les raccords de profil (28, 39) comportant des coulisseaux (37) pouvant être insérés dans les rainures longitudinales (19) des baguettes de profil (17),
**caractérisé en ce que**
le système de construction modulaire comprend en outre des baguettes de profil en acier (1), formées à partir de tôles par des processus de pliage et qui comportent, sur leurs côtés longitudinaux (2) à angle droit entre eux, des rainures longitudinales contre-dépouillées (3) dont les largeurs (b1) des ouvertures de rainure coïncident avec les largeurs (b2) des ouvertures de rainure des rainures longitudinales (19) situées sur les côtés longitudinaux (18) des baguettes de profil en aluminium, les coulisseaux (37) des raccords de profil (28, 39) pouvant être insérés dans les rainures longitudinales (3) des baguettes de profil en acier (1) et, au moyen des raccords de profil (28, 39), une baguette de profil en acier (1) peut être reliée sur son côté frontal à un côté longitudinal (18) d'une baguette de profil en aluminium (17) et une baguette de profil en aluminium (17) peut être reliée sur son côté frontal au côté longitudinal (2) d'une baguette de profil en acier (1).

2. Système de construction modulaire selon la revendication 1,
**caractérisé en ce que**
les baguettes de profil en acier (1) comportent une ouverture intérieure (16) traversant suivant la direction longitudinale de la baguette de profil en acier.

3. Système de construction modulaire selon la revendication 1 ou 2,
**caractérisé en ce que**
les saillies (5, 24), limitant vers l'extérieur les zones contre-dépouillées (4, 25) d'une rainure longitudinale (3, 19) considérée, à la fois des baguettes de profil en aluminium (17) et des baguettes de profil en acier (1) comportent des surfaces de limitation (9, 26) des rainures longitudinales (3, 19), lesquelles se situent parallèlement à la surface extérieure (10, 27) du côté longitudinal (2, 18) comportant cette rainure longitudinale (3, 19).

4. Système de construction modulaire selon la revendication 3,
**caractérisé en ce que**
les saillies (5), limitant les zones contre-dépouillées (4), des baguettes de profil en acier (1) comportent des traverses intérieures et extérieures (6, 7) qui sont à chaque fois reliées entre elles par l'intermédiaire d'un pliage (8).

5. Système de construction modulaire selon la revendication 4,
**caractérisé en ce qu'**
aux traverses extérieures (7) des saillies (5) se raccordent des traverses de prolongement (11), les traverses de prolongement (11) de deux côtés longitudinaux voisins (2) de la baguette de profil en acier (1) incluant entre elles un angle de profil (12).

6. Système de construction modulaire selon la revendication 5,
**caractérisé en ce que**
trois des angles de profil (12) sont formés de pliures entre les traverses de prolongement (11), et les traverses de prolongement (11) sont soudées entre elles au niveau du quatrième angle de profil (12).

7. Système de construction modulaire selon l'une des revendications 4 à 6,
**caractérisé en ce que**
les traverses intérieures (6) des saillies (5) sont à chaque fois reliées, par l'intermédiaire d'un pliage, à une traverse diagonale (13), et deux traverses diagonales (13), reliées aux traverses intérieures (6) de saillies (5) de côtés longitudinaux voisins (2) de la baguette de profil en acier (1), sont adjacentes l'une à l'autre et s'étendent conjointement en direction de l'axe longitudinal central (14) de la baguette de profil en acier (1).

8. Système de construction modulaire selon la revendication 7,
**caractérisé en ce que**
les deux traverses diagonales (13), reliées aux traverses intérieures (6) des saillies (5) situées sur le même côté longitudinal (2), sont reliées entre elles par l'intermédiaire de traverses de jonction (15), les traverses de jonction (15) incluant entre elles une ouverture centrale (16) traversant suivant la direction longitudinale de la baguette de profil en acier (1).

9. Système de construction modulaire selon l'une des revendications 1 à 8,
**caractérisé en ce que**
les baguettes de profil en aluminium (17) comportent une ouverture intérieure (21) traversant suivant la direction longitudinale de la baguette de profil en aluminium.

10. Système de construction modulaire selon l'une des revendications 1 à 9,
**caractérisé en ce qu'**
un raccord profilé (39) comporte un corps (40) qui peut être fixé sur le côté frontal d'une baguette de profil en aluminium (17) ou d'une baguette de profil en acier (1) et possède des ouvertures de passage (43, 44) à travers lesquelles des boulons filetés (45) peuvent être vissés dans des coulisseaux (37) insérés dans une rainure longitudinale (3, 19) d'une baguette de profil en acier (1) ou d'une baguette de profil en aluminium (17).

11. Système de construction modulaire selon l'une des revendications 1 à 10,
**caractérisé en ce qu'**
un raccord profilé (28) comporte des pièces de raccord (29, 30) dont l'une est pourvue d'un boulon transversal (31) et dont l'autre est pourvue d'une ouverture de passage (34) orientée transversalement dans laquelle le boulon transversal (31) peut être introduit et fixé, en notant que les pièces de raccord (29, 30) comportent des ouvertures de passage (35, 36) à travers lesquelles on peut faire passer des boulons filetés qui peuvent être vissés dans des coulisseaux (37).

12. Système de construction modulaire selon la revendication 11,
**caractérisé en ce que**
le boulon transversal (31) comporte un perçage de traversée (33) à travers lequel on peut faire passer le boulon fileté (38) que l'on a fait passer à travers l'ouverture de passage (36) située dans la pièce de raccord (30).

13. Système de construction modulaire selon l'une des revendications 1 à 12,
**caractérisé en ce que**
les profondeurs de rainure (t1, t2) des rainures longitudinales (3, 19) des baguettes de profil en acier (1) et des baguettes de profil en aluminium (17) sont essentiellement les mêmes.

14. Système de construction modulaire selon l'une des revendications 1 à 13,
**caractérisé en ce que**
les largeurs (w1) des zones contre-dépouillées (4) des rainures longitudinales (3) des baguettes de profil en acier (1) sont au moins aussi grandes que les largeurs (w2) des zones contre-dépouillées (25) des rainures longitudinales (19) des baguettes de profil en aluminium (17).

15. Système de construction modulaire selon l'une des revendications 1 à 14,
**caractérisé en ce que**
les côtés longitudinaux (2, 18) aussi bien des baguettes de profil en acier (1) que des baguettes de profil en aluminium (17), considérés en vue frontale, se situent à chaque fois sur les côtés d'un carré imaginaire, et les carrés imaginaires pour les baguettes de profil en acier (1) et les baguettes de profil en aluminium (17) comportent la même longueur de côtés.
